(19) **Europäisches Patentamt**
**European Patent Office**
**Office européen des brevets**

(11) Publication number : **0 485 221 A2**

# (12) EUROPEAN PATENT APPLICATION

(21) Application number : **91310325.5**

(22) Date of filing : **07.11.91**

(51) Int. Cl.⁵ : **H04N 9/04**

(30) Priority : **08.11.90 JP 303568/90**

(43) Date of publication of application :
**13.05.92 Bulletin 92/20**

(84) Designated Contracting States :
**DE ES FR GB IT**

(71) Applicant : **SONY CORPORATION**
**7-35, Kitashinagawa 6-chome Shinagawa-ku**
**Tokyo (JP)**

(72) Inventor : **Sase, Masatoshi**
**c/o Sony Corporation, 7-35 Kitashinagawa**
**6-chome**
**Shinagawa-ku, Tokyo (JP)**

(74) Representative : **Nicholls, Michael John et al**
**J.A. Kemp & Co., 14, South Square, Gray's Inn**
**London WC1R 5LX (GB)**

(54) **A solid-state image pick-up device having a color filter.**

(57) A solid-state image pickup device is comprised of an array of light receiving elements arranged in a two-dimensional matrix fashion, and a color filter array composed of color filters respectively located in front of the light receiving elements, wherein the color filter array has a fundamental unit of color filters of 8 pixels formed of 2 pixels in the scanning direction and 4 pixels in the direction perpendicular to the scanning direction, and the arrangement of the fundamental unit is selected as

    a  b
    a  c
    a  b
    c  a

where a, b and c represent a color filter of a first primary color, a color filter of a second primary color and a color filter of a third primary color, respectively.

FIG. 4

The present invention generally relates to solid-state image pickup devices and, more particularly, is directed to a solid-state image pickup device having a color filter which is suitable as a CCD image pickup device for a color video camera of, for example, a single chip type.

An image pickup device using a charge-coupled device (CCD) for use with a single chip type color video camera is generally comprised of an array of light receiving elements arranged in a two-dimensional matrix fashion, a color filter array of color filters disposed in front of these light receiving elements, horizontal and vertical transfer CCDs for sequentially transferring output signals of the array of the light receiving elements and so on. A wide variety of color coding methods have been proposed for the color filter array, and the coding method utilizing the color filter of complementary color is widely utilized in the prior art.

The frame storage method and field storage method are both known as methods for transferring signals from CCD image pickup device. The coding system of the conventional color filter array will be described below, wherein a signal of an interline transfer type CCD image pickup device is transferred by means of the field storage transfer system.

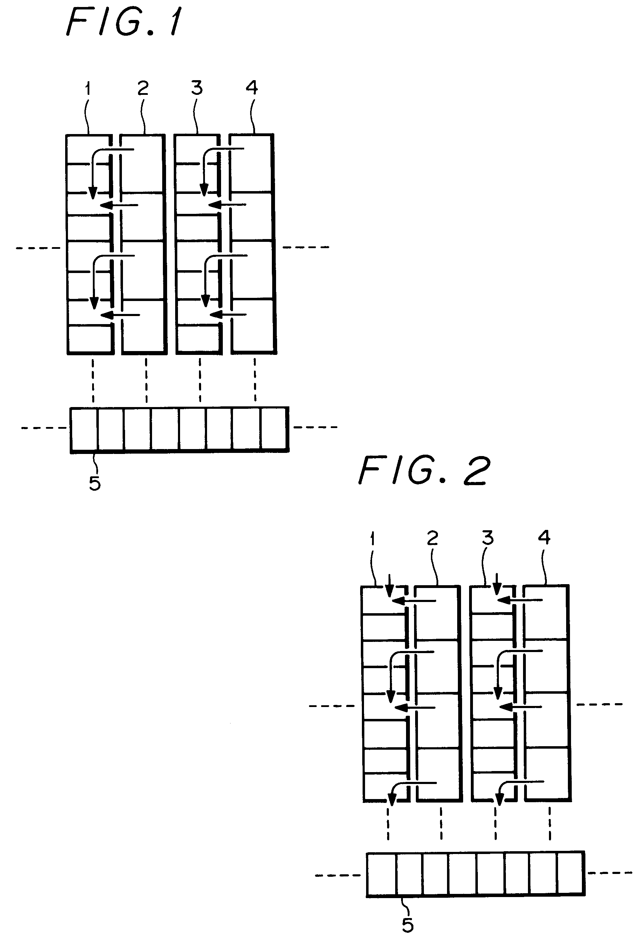

As shown in FIG. 1, in the CCD image pickup device, a vertical transfer unit 1, a photo-sensitive unit 2, a vertical transfer unit 3, a photo-sensitive unit 4, ... are repeatedly formed in the horizontal direction (i.e., the scanning direction) and a horizontal transfer unit 5 is formed on the extension of the vertical transfer units 1, 3, ... In this case, in the odd field, signals of, for example, odd-numbered pixels (i.e., picture elements) from pixels of the photo-sensitive units 2, 4, ..., adjoining the horizontal transfer unit 5 and signals of the next even-numbered pixels are respectively added by the vertical transfer units 1, 3, ... and then read out. In the even field, as shown in FIG. 2, signals of, for example, even-numbered pixels and signals of the next odd-numbered pixels from pixels adjoining the horizontal transfer unit 5 are added by the vertical transfer units 1, 3, ... and then read out.

FIG. 3A shows a color filter array 6 formed of color filters located in front of respective pixels of the photo-sensitive units 2, 4, ... of FIGS. 1 and 2. In FIG. 3A, reference numeral 7 depicts fundamental 8 pixels, and the fundamental 8 pixels are composed of 8 color filters which are 2 pixels wide in the horizontal direction (X direction) which is the scanning direction and 4 pixels long in the vertical direction (Y direction). The color filter array 6 is formed by repeatedly arranging the fundamental 8 pixels 7 in the X and Y directions.

In the fundamental 8 pixels 7, the left 4 pixels are composed of a green filter G, a cyan filter Cy, a magenta filter Mg and a cyan filter Cy from above and the right 4 pixels are composed of a magenta filter Mg, a yellow filter Ye, a green filter G and a yellow filter Ye from above.

If signals are read out by using the color filter array 6 shown in FIG. 3A in a field storage fashion, then signals of pixels of adjacent 2 lines 8A, 8B, 8C, ... are mixed and then sequentially read out during, for example, the even field, while signals of pixels of different 2 lines 9A, 9B, 9C, 9D which are different in phase by 180 degrees are mixed and then sequentially read out during the odd field.

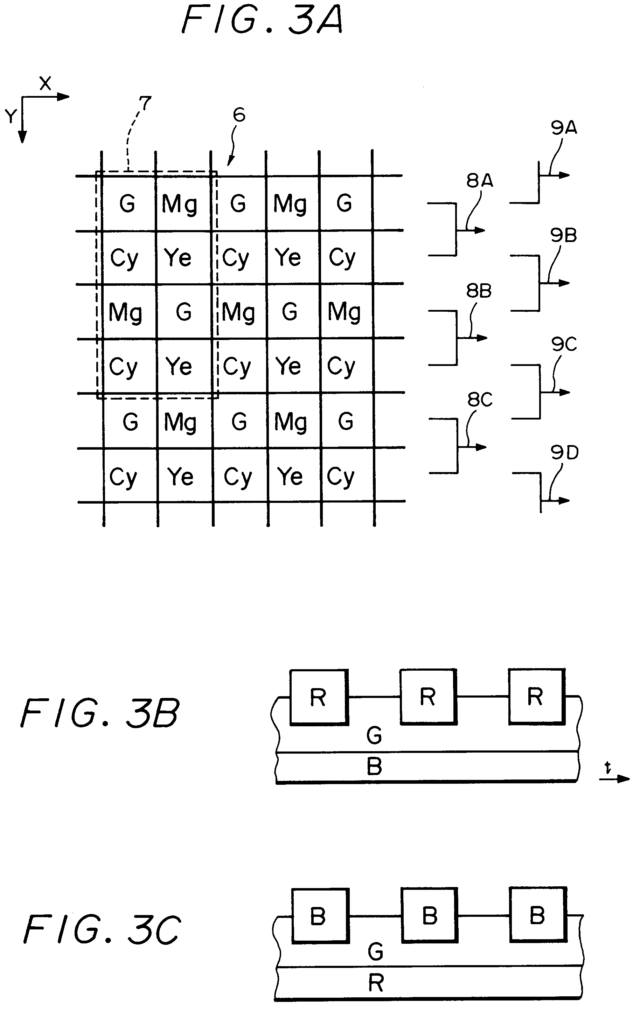

In this case, if the code of the color filter is utilized as an image pickup signal such as when G represents an image pickup signal obtained from the pixel of the green filter G, then scanning signals G + Cy, Mg + Ye, ... are obtained by mixing 2 lines 8A of the even field. If image pickup signals Cy, Mg, Ye of complementary color are respectively represented by G + B, R + B and R + G, then scanning signals which result from mixing 2 lines 8A of even field become 2G + B, 2R + B + G, ... as shown in FIG. 3B. These scanning signals are processed by a low-pass filter circuit to provide a luminance signal proportional to (2R + 3G + 2B), and also these scanning signals are processed by a Bandpass filter circuit to provide a color signal proportional to (2R - G).

Similarly, if the next 2 lines 8B of the even field are mixed, then there are provided scanning signals R + G + 2B, R + 2G, ... as shown in FIG. 3C. These scanning signals are processed by the low-pass filter circuit to provide a luminance signal proportional to (2R + 3G + 2B), and these scanning signals are processed by the bandpass filter circuit to provide a color signal proportional to (2B - G).

Further, if 2 lines 9B of the odd field are mixed, then there are provided scanning signals R + G + 2B, R + 2G, ..., while if the next 2 lines 9C of the odd field are mixed, then there are provided scanning signals 2G + B, 2R + G + B, ..., which fact means that the same scanning signals as those of the even field are obtained during the odd field except different phases. That is, if the color filter array 6 of FIG. 3A is employed, then the luminance signals represent the equal value in all scanning signals of the even and odd fields, and two kinds of color signals are obtained from the adjacent two scanning signals. Accordingly, if these two kinds of color signals are processed in a matrix fashion, then color difference signals of, for example, the NTSC signal can be generated.

The reason that the conventional color filter array 6 employs complementary color filters is that the light receiving amount in the photo-sensitive unit is increased by the complementary color, which can make the CCD image pickup device excellent in sensitivity.

However, since the color filter of the complementary color is utilized in the conventional color coding, ideal red signal R, green signal G and blue signal B cannot be obtained finally regardless of the matrix processing.

There is then the disadvantage that color reproducibility thereof is limited.

Accordingly, it is an object of the present invention to provide an improved solid-state image pickup device in which the aforementioned shortcomings and disadvantages encountered with the prior art can be eliminated.

More specifically, it is an object of the present invention to provide a solid-state image pickup device in which a luminance signal is obtained from each scanning signal in the even and odd fields even by using the color coding based on the color filters of primary colors.

Another object of the present invention is to provide a solid-state image pickup device in which different color signals are obtained from adjacent two scanning signals so that a color reproducibility can be improved.

A further object of the present invention is to provide a solid-state image pickup device for use with a single chip type color video camera.

As an aspect of the present invention, a solid-state image pickup device is comprised of an array of light receiving elements arranged in a two-dimensional matrix fashion, and a color filter array composed of color filters respectively located in front of said light receiving elements, wherein said color filter array has a fundamental unit of color filters of 8 pixels formed of 2 pixels in the scanning direction and 4 pixels in the direction perpendicular to the scanning direction, and the arrangement of said fundamental unit is selected as

a   b
a   c
a   b
c   a

where a, b and c represent a color filter of a first primary color, a color filter of a second primary color and a color filter of a third primary color, respectively.

The above and other objects, features, and advantages of the present invention will become apparent in the following detailed description of an illustrative embodiment thereof to be read in conjunction with the accompanying drawings, in which like references are used to identify the same or similar parts in the several views, in which:-

FIGS. 1 and 2 are respectively schematic diagrams used to explain the field storage operation of the CCD image pickup device;

FIGS. 3A to 3C are respectively schematic diagrams used to explain a color image pickup system according to the prior art;

FIG. 4 is a plan view illustrating a part of a color filter array according to an embodiment of the present invention;

FIGS. 5A and 5B are respectively schematic diagrams showing scanning signals of the even field according to the embodiment of the present invention;

FIGS. 6A and 6B are respectively schematic diagram showing scanning signals of the odd field according to the embodiment of the present invention;

FIG. 7 is a plan view illustrating a specific example of the color filter array used in the present invention; and

FIG. 8 is a block diagram showing an example of a signal processing circuit for processing an output signal of the CCD image pickup device according to the present invention.

## DESCRIPTION OF THE PREFERRED EMBODIMENT

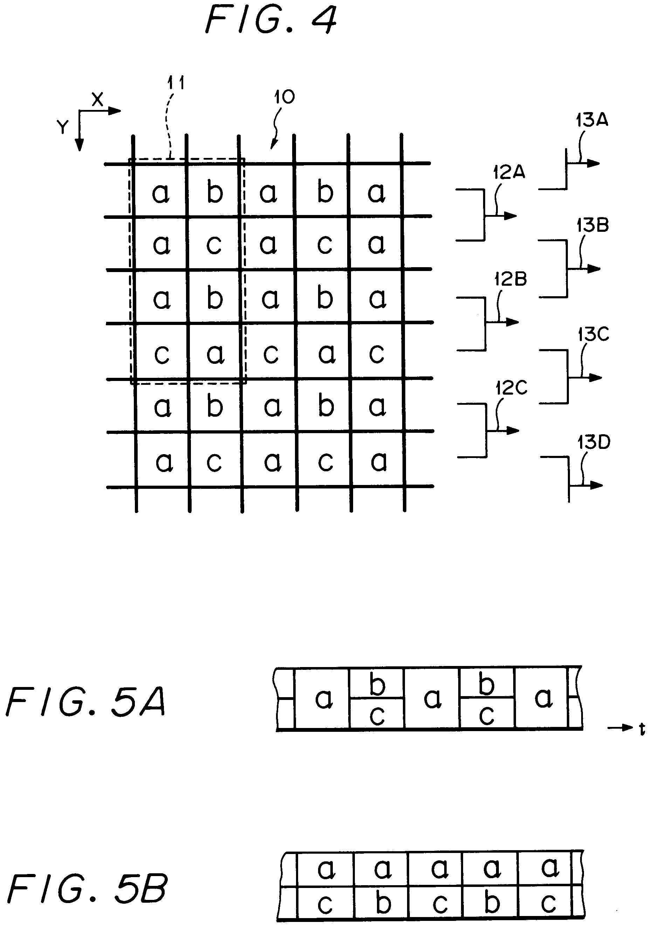

The CCD image pickup device according to the embodiment of the present invention will now be described with reference to FIGS. 4 through 8. In this embodiment, the present invention is applied to the CCD image pickup device of the field storage system shown in FIGS. 1 and 2.

FIG. 4 shows a color filter array 10 according to this embodiment. In this case, individual light receiving pixels of the photo-sensitive units, 2, 4, ... of FIGS. 1 and 2 are respectively arranged below color filters constructing the color filter array 10. In FIG. 4, reference numeral 11 depicts a set of fundamental 8 pixels, and a set of fundamental 8 pixels 11 is composed of totally 8 color filters of 2 pixels allocated to the horizontal direction (X direction) which is the scanning direction and 4 pixels allocated to the vertical direction (Y direction). A set of fundamental 8 pixels 11 is repeated respectively in the X direction and in the Y direction, thereby the color filter array 10 being formed.

Assuming that a color filter $\underline{a}$ of a first primary color represents one arbitrary color of red filter R, green filter G and blue filter B of three primary colors, a color filter $\underline{b}$ of a second primary color filter represents one arbitrary color filter of the remaining two primary colors and a color filter $\underline{c}$ of a third primary color represents the last color filter, then the four color filters of the left side of the fundamental 8 pixels 11 are sequentially arranged in the order of the color filter $\underline{a}$, the color filter $\underline{a}$, the color filter a and the color filter $\underline{c}$ from above. Further, the four color filters of the right side of the fundamental 8 pixels 11 are sequentially arranged in the order of the color filter b, the color filter c, the color filter b and the color filter a from above.

However, if color filters of 2 pixels are taken out from the X direction and color filters of 4 pixels are taken out from the Y direction of the color filter array 10, then the 8 color filter thus taken out can be regarded as a new set of fundamental 8 pixels and therefore such fundamental 8 pixels have 8 expressions. As a consequence, the following blocks formed of, for example, 8 color filters can be respectively regarded as fundamental 8 pixels:

```
b   a        a   b              c   a

c   a        c   a              b   a

b   a    ,   a   b      or      a   c

a   c        a   c              b   a
```

Since the color filter array 10 is formed by repeating the fundamental 8 pixels, it can be considered that, regardless of the selection of the fundamental 8 pixels, the arrangement of the color filter array 10 is the same. That is, the fundamental pixels 11 are employed as the fundamental 8 pixels in the present invention, which fact is equivalent to the fact that one arbitrary expression is selected from the above 8 expressions.

The scanning signal presented when the color filter array 10 of this embodiment is used will be described. Since the CCD image pickup device of this embodiment is operated in a field storage fashion, one scanning signal is a mixed signal of image pickup signals of pixels of two lines in the X direction. Assuming that a certain scanning signal of, for example, an even field is a mixed signal of 2 lines 12A, then the following signals are mixed signals of the succeeding 2 lines 12B, 12C, .... Then, the scanning signals of odd field are mixed signals of 2 lines 13A, 13B, 13C, ... the phases of which are different from those of the signals of respective 2 lines in the even field by 180 degrees.

In this case, if the image pickup signal corresponding, for example, to the color filter a is expressed by a, then the scanning signals based on the 2 lines 12A of the even field become 2a, b + c, 2a, b + c, ... as shown in FIG. 5A, and the scanning signal based on the next 2 lines 12B become a + c, a + b, a + c, a + b, ... as shown in FIG. 5B. Accordingly, if the processing utilizing, for example, a filter circuit is employed, then a signal proportional to (2a + b + c) is obtained from one scanning signal in the even field by means of a low-pass filter circuit and a signal proportional to (2a - b - c) is obtained by means of a bandpass filter circuit. In that case, since the low band component includes all components of the three primary colors, such low band component can be regarded as the luminance signal and the bandpass component can be regarded as the color signal.

Further, a luminance signal proportional to (2a + b + c) is obtained from the next scanning signal of even field by means of a low-pass filter circuit and a color signal proportional to (c - b) is obtained therefrom by means of a bandpass filter circuit. Thereafter, these two kinds of signals become scanning signals alternately.

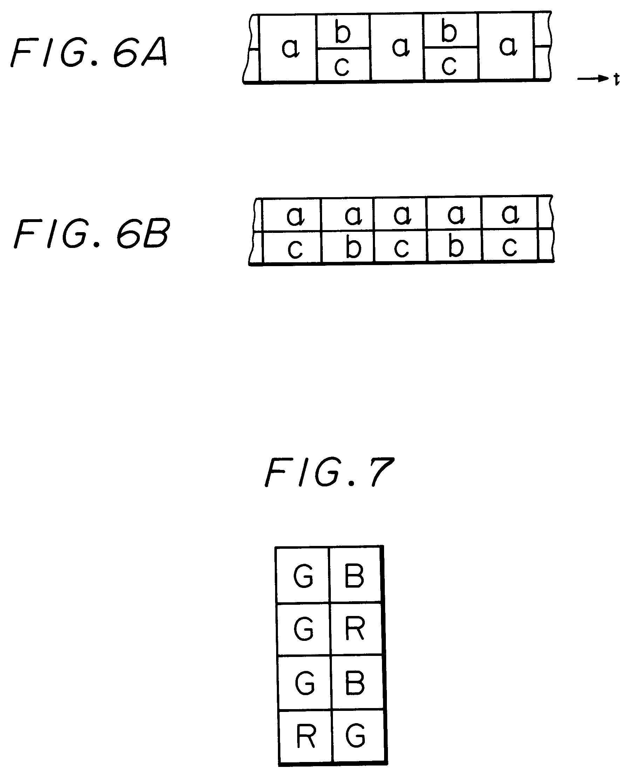

In a like manner, a scanning signal based on the 2 lines 13B of odd field become 2a, b + c, ..., as shown in FIG. 6A and a scanning signal of the next 2 lines 13C becomes a + c, a + b, ... as shown in FIG. 6B. Accordingly, also in the odd field, the same scanning signal as that of the even field can be obtained.

If the color filter array 10 of this embodiment is utilized as described above, then the same scanning signals can be obtained during the even fiend and odd field. Further, the luminance signal proportional to (2a + b + c) can be obtained from all of the scanning signals and color signals proportional to (2a - b - c) and (c - b) can be alternately obtained from the adjacent scanning signals. Accordingly, since different color informations are obtained at every scanning signal, a video signal of the NTSC system or the like can be generated by the matrix processing similarly to the conventional case such that the color filters of the complementary color is utilized.

Further, since the color filter array 10 of this embodiment is constructed by the combination of only color filters R, G and B of three primary colors, the spectral characteristic of the color signal of the finally obtained video signal becomes the spectral characteristic presented on the light receiving screen of the CCD image pickup device. There is then the advantage that color reproducibility thereof is very excellent.

While the color filter array 10 of the embodiment of FIG. 4 is expressed in the generalized form, if the green filter G, the blue filter B and the red filter R are respectively employed as the color filter a, the color filter b and the color filter c, then the fundamental 8 pixels 11 of the color filter array 10 become as shown in FIG. 7. If the signal is read out by utilizing the color filter array formed of fundamental 8 pixels of the example of FIG. 4 in a field storage fashion, then certain scanning signals become 2G, B + R, ... and the next scanning signals become G + R, B + G, ...

Accordingly, let us consider the case such that adjacent two scanning signals are processed by using a one horizontal period (1H) delay circuit in a matrix fashion. In this case, if the processings expressed as

$$2G/2 = G$$

$$(G + R) - 2G/2 = R$$

$$(G + B) - 2G/2 = B$$

are carried out, then three primary color signals R, G and B can be reproduced. If these three primary color signals are further processed in a color matrix processing fashion, then two color difference signals of, for example, the NTSC system can be reproduced with ease.

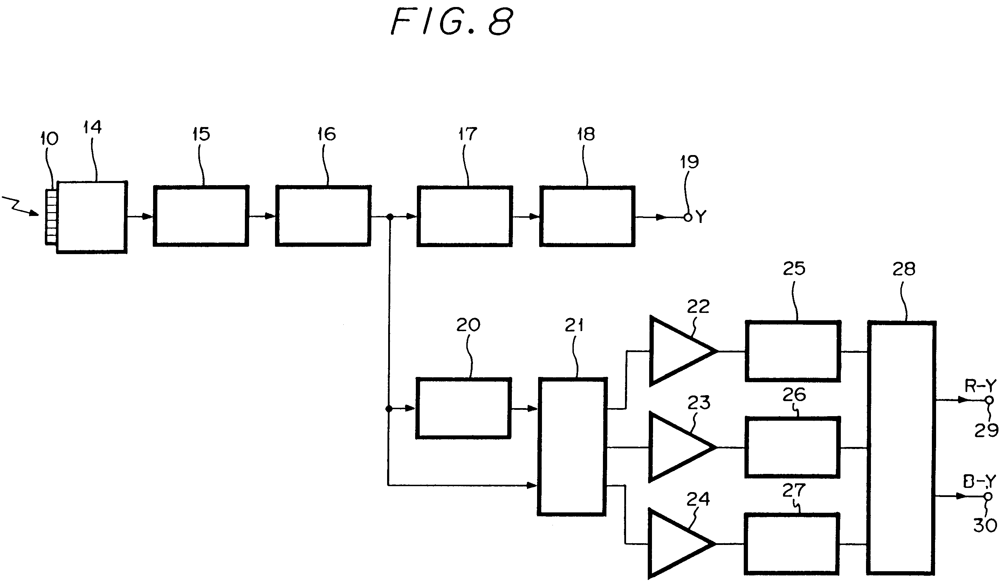

An example of an imase signal processing circuit in the image pickup device which utilizes the color filter array 10 of the example of FIG. 4 will be described with reference to FIG. 8. The image signal processing circuit of this embodiment is adapted to process adjacent two scanning signals by utilizing a 1H delay circuit where 1H represents one horizontal period.

FIG. 8 shows in block form the signal processing circuit according to this embodiment. Referring to FIG. 8, a scanning signal (image pickup signal) from a charge-coupled device (CCD) 14 on which the color filter array 10 is mounted is supplied through a sample and hold circuit 15 to an automatic gain control (AGC) amplifier 16. An output signal from the AGC amplifier 16 is supplied through a low-pass filter circuit 17 to a gamma correction circuit 18, from which there is derived a luminance signal Y and this luminance signal Y is fed to a connection terminal 19.

The output signal of the AGC amplifier 16 is also supplied directly to and through a 1H delay circuit 20 to a matrix circuit 21 which then derives three primary color signals R, G and B. The three primary color signals R, G and B from the matrix circuit 21 are respectively supplied through white balance amplifiers 22 to 24 and gamma correction circuits 25 to 27 to a color matrix circuit 28 which then derives red and blue color difference signals R-Y and B-Y. These color difference signals R-Y and B-Y from the color matrix circuit 28 are respectively supplied to connection terminals 29 and 30. Then, the luminance signal Y and the color difference signals R-Y and B-Y are processed by, for example, an NTSC encoder to provide a color video signal of the NTSC system, though not shown.

While the present invention is applied to the CCD image pickup device of interline transfer type which also derives a scanning signal according to the field storage system in the above-mentioned embodiment, the present invention is not limited thereto and may be applied to a CCD image pickup device of frame transfer type. Further, the present invention can be similarly applied to a CCD image pickup device of frame storage system.

As described above, according to the present invention, the luminance signal can be obtained from each scanning signal even by employing the color coding based on the color filters of primary colors, thereby different color informations being obtained from each scanning signal.

Also, according to the present invention, a color reproducibility can be improved as compared with the case such that the color filter of the complementary color type is utilized.

Having described the preferred embodiment of the invention with reference to the accompanying drawings, it is to be understood that the invention is not limited to that precise embodiment and that various changes and modifications thereof could be effected by one skilled in the art without departing from the spirit or scope of the novel concepts of the invention as defined in the appended claims.

## Claims

1. A solid-state image pickup device comprising:

   (a) an array of light receiving elements (2,4) arranged in a two-dimensional matrix fashion; and

   (b) a color filter array (6,10) composed of color filters respectively located in front of said light receiving elements (2,4), wherein said color filter array (6,10) has a fundamental unit (7) of color filters of 8 pixels formed of 2 pixels in the scanning direction and 4 pixels in the direction perpendicular to the scanning direction, characterized in that the arrangement of filters within said fundamental unit (7) is

   a  b
   a  c
   a  b
   c  a

   where a, b and c represent a color filter of a first primary color, a color filter of a second primary color and a color filter of a third primary color, respectively.

2. A solid-state image pickup device according to claim 1, wherein said light receiving elements (2,4) are formed of a charge-coupled device.

3. A solid-state image pickup device according to claim 1 or 2, wherein said primary color filter "a" is a green filter.

4. A solid-state image pickup device according to claim 1, 2 or 3, wherein said primary color filter "b" is a blue filter.

5. A solid-state image pickup device according to claim 1, 2, 3 or 4 wherein said primary color filter "c" is a red filter.

6. A solid-state image pickup device according to any one of the preceding claims, wherein a luminance signal is obtained from a low band component and a chrominance signal is obtained from a middle band component of an output which results from processing the output of each of said light receiving elements (2,4) by a sample-and-hold circuit (15).

7. A solid-state image pickup device according to claim 6, wherein three primary color signals are generated from a matrix circuit (28) which is supplied with the output of said sample-and-hold circuit (15) directly and/or through a 1H delay circuit (20).

# FIG. 1

# FIG. 2

## FIG. 3A

## FIG. 3B

## FIG. 3C

# FIG. 4

# FIG. 5A

# FIG. 5B

FIG. 6A

| a | b | a | b | a |
|   | c |   | c |   |

→ t

FIG. 6B

| a | a | a | a | a |
| c | b | c | b | c |

FIG. 7

| G | B |
| G | R |
| G | B |
| R | G |

FIG. 8

EP 0 485 221 A2